# EUROPEAN PATENT APPLICATION

(11) **EP 4 632 921 A1**
(43) Date of publication of application: **15.10.2025**
(21) Application number: 24753588.3
(22) Date of filing: 06.02.2024
(51) Int. Cl.: H01M 50/383, H01M 50/112, H01M 50/367, H01M 10/613, H01M 10/42, H01M 50/204, H01M 50/249

(54) **BATTERY PACK AND VEHICLE INCLUDING SAME**

(30) Priority: 08.02.2023 KR 20230016870
(71) Applicant: LG Energy Solution, Ltd., Seoul 07335 (KR)
(72) Inventor: JANG, Sung-Hwan, Daejeon 34122 (KR); SEONG, Jun-Yeob, Daejeon 34122 (KR)
(74) Representative: Plasseraud IP
(86) International application number: PCT/KR2024/001701
(87) International publication number: WO 2024/167263

(57) **Abstract**

A battery pack according to the present disclosure includes: a plurality of battery modules each having a sensor member configured to detect gas or heat; a pack case including a wall frame that has a gas venting path provided therein to communicate with the battery module and surrounds the battery module; and a venting path cooling unit configured to cool the gas venting path by causing a cooling medium to flow through the wall frame on the basis of a danger signal generated from the sensor member.

## Description

### TECHNICAL FIELD

The present disclosure relates to a battery pack, and more specifically, it relates to technology to prevent fires from spreading rapidly when ignition occurs inside the battery pack.

The present application claims priority to Korean Patent Application No. 10-2023-0016870 filed on February 08, 2023 in the Republic of Korea, the disclosures of which are incorporated herein by reference.

### BACKGROUND ART

Secondary batteries are attracting attention as a new energy source for improving eco-friendliness and energy efficiency because of the primary advantage of dramatically reducing the use of fossil fuels and another advantage of not generating by-products resulting from energy use.

Accordingly, secondary batteries are being increasingly applied to various devices. For example, secondary batteries are being widely used as energy sources for multifunctional small products such as wireless mobile devices or wearable devices, and are also being used as an energy source for electric vehicles, hybrid electric vehicles, and the like, which are presented as alternatives to existing gasoline and diesel vehicles, and as an energy storage system (ESS).

In general, each secondary battery has an operation voltage of approximately 2.5V to 4.5V. Therefore, for an electric vehicle or energy storage device that requires large capacity and high output, battery modules in which multiple secondary batteries are connected in series and/or parallel are connected in series and/or parallel to form a battery pack that is used as an energy source.

As described above, as secondary batteries are used as large-capacity and high-output energy sources, securing the safety of the battery pack has become an important issue.

Existing battery packs include pack structures such as crossbeams between battery modules to block propagation of heat between the battery modules when a thermal event occurs, thereby temporarily delaying chain ignition. However, as the ignition of the battery module continues, the large amount of high-temperature gas released from the battery module may cause thermal damage to other surrounding battery modules, promoting chain ignition, and further increase the internal pressure of the battery pack, leading to structural collapse or explosion thereof. Accordingly, the existing battery pack is configured to have a venting hole in a pack case to discharge gas to the outside. However, if the large amount of high-temperature gas and flame is strongly discharged outside the battery pack, fire may rapidly spread to other structures outside the battery pack, such as a vehicle equipped with the battery pack, as well as to the battery pack.

### DISCLOSURE

### Technical Problem

The present disclosure has been designed to solve the problems of the related art, and therefore the present disclosure is directed to providing a battery pack capable of suppressing high-temperature gas and flame from being strongly discharged to the outside of the battery pack when ignition occurs inside the battery pack.

In addition, the present disclosure is also directed to providing a battery pack capable of maximally delaying the propagation of thermal runaway between battery modules.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack according to the present disclosure may include: a plurality of battery modules each having a sensor member configured to detect gas or heat; a pack case including a wall frame that has a gas venting path provided therein to communicate with the battery module and surrounds the battery module; and a venting path cooling unit configured to cool the gas venting path by causing a cooling medium to flow through the wall frame on the basis of a danger signal generated from the sensor member.

The venting path cooling unit may include: a cooling medium channel configured to provide a passage for the cooling medium to move inside and outside the wall frame; and a coolant controller configured to receive a danger signal from the sensor member and circulate the cooling medium through the cooling medium channel.

The cooling medium channel may include a wall-inside channel provided inside the wall frame where the gas venting path is located, and a wall-outside channel communicating with the wall-inside channel and provided outside the wall frame.

The wall frame may include a channel connector on at least one side, and the wall-inside channel and the wall-outside channel may be configured to be connected and disconnected through the channel connector.

The pack case may include: a pack tray including a base plate configured to support the bottom of the plurality of battery modules, and the wall frame disposed along the perimeter of the base plate while standing on the base plate; and a pack cover configured to cover a top opening of the pack tray.

The wall frame may be made of a thermally conductive material such that the cooling medium channel and the gas venting path exchange heat with each other.

The wall frame may include: a gas inflow wall including the gas venting path and at least one gas inlet connected to the battery module to allow gas to flow from the battery module into the gas venting path; and a gas discharge wall including the gas venting path and a gas outlet configured to discharge gas from the gas venting path to the outside of the pack case.

At least a portion of the cooling medium channel may extend parallel to the gas venting path inside the gas inflow wall and the gas discharge wall.

The cooling medium channel may be configured in the form of a round track surrounding the gas venting path inside the gas inflow wall and the gas discharge wall.

The sensor member may include at least one of a temperature sensor configured to sense a change in temperature of the battery module and a gas sensor configured to sense gas generated from the battery module.

The sensor member may be configured to transmit a danger signal to the venting path cooling unit if a state in which a rate of temperature change of the battery module is greater than 1 degree C (dT/dt > 1°C) lasts for 3 seconds or more on the basis of a predetermined threshold temperature.

The pack tray may include a partition disposed on the upper surface of the base plate and configured to partition the inner space of the pack tray horizontally or vertically.

The base plate may include a floor fluid passage therein, and a plurality of floor fluid passages may be respectively provided in sections of the base plate corresponding to the positions of the respective battery modules so as to cause the cooling medium to flow in the respective sections.

The coolant controller may be configured to selectively supply, based on the danger signal, the cooling medium to the floor fluid passages such that the cooling medium flows intensively in the sections of the base plate where other battery modules, which are adjacent to a battery module that transmits the danger signal, among the plurality of battery modules, are located.

According to another aspect of the present disclosure, there is provided a vehicle including the battery pack described above.

### Advantageous Effects

According to one aspect of the present disclosure, it is possible to provide a battery pack capable of suppressing high-temperature gas and flame from being strongly discharged to the outside of the battery pack when ignition occurs inside the battery pack.

According to another aspect of the present disclosure, it is possible to provide a battery pack capable of maximally delaying propagation of thermal runaway between battery modules.

The effects obtainable from the present disclosure are not limited to the above-mentioned effects, and other effects not mentioned above will be clearly understood by those skilled in the art from the description of the invention described below.

### DESCRIPTION OF DRAWINGS

FIG. 1 is a schematically perspective view of a battery pack according to an embodiment of the present disclosure.
FIG. 2 is a partially exploded perspective view of the battery pack in FIG. 1.
FIG. 3 is a diagram schematically illustrating the configuration of a gas venting path, a cooling medium channel, and a pack tray according to an embodiment of the present disclosure.
FIG. 4 is a schematically cross-sectional view of a right side wall taken along line B-B' in FIG. 3.
FIG. 5 is a schematically cross-sectional view of a front side wall taken along line C-C' in FIG. 3.
FIG. 6 is a schematically cross-sectional view of the battery pack taken along A-A' in FIG. 1.
FIG. 7 is a diagram illustrating an example of a cooling operation for a gas venting path of a battery pack according to an embodiment of the present disclosure.
FIG. 8 is a perspective view of a battery pack viewed from the bottom according to another embodiment of the present disclosure.
FIG. 9 is a diagram schematically illustrating the configuration of a cooling system of the battery pack in FIG. 8.
FIGS. 10 and 11 are diagrams illustrating the flow of cooling water when a thermal event occurs in the battery module of the battery pack in FIG. 8.
FIG. 12 is a diagram schematically illustrating a vehicle including a battery pack according to the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

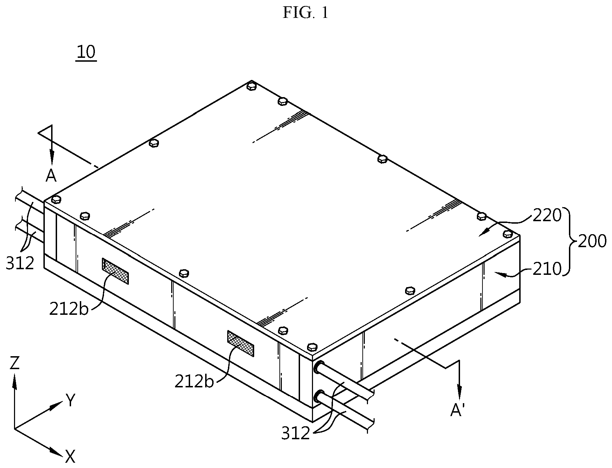

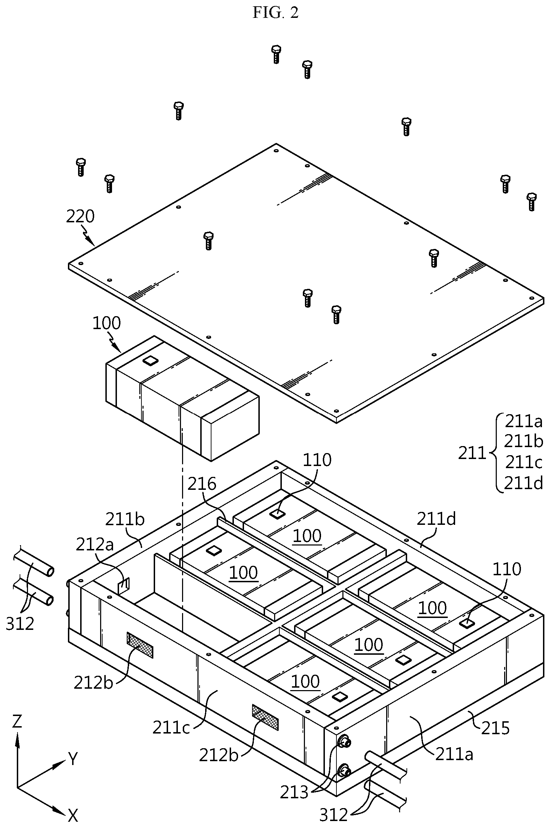

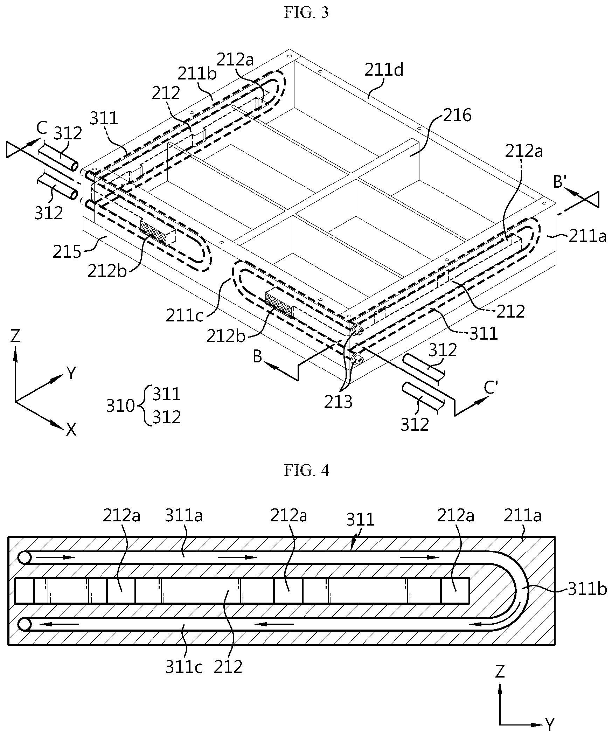

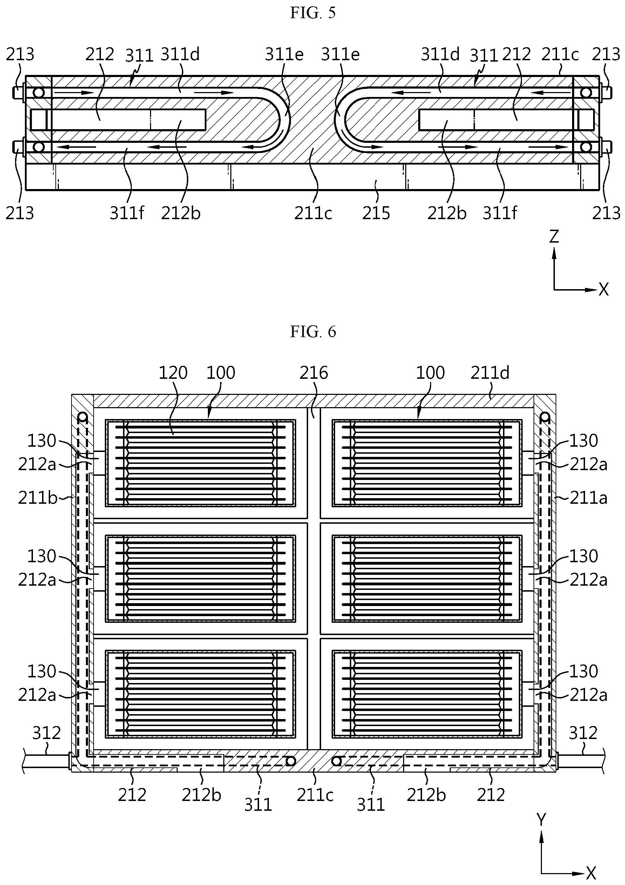

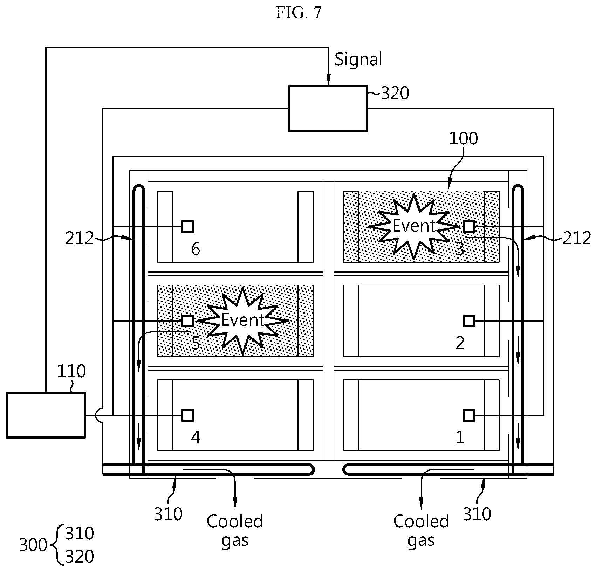

FIG. 1 is a schematically perspective view of a battery pack according to an embodiment of the present disclosure, FIG. 2 is a partially exploded perspective view of the battery pack in FIG. 1, FIG. 3 is a diagram schematically illustrating the configuration of a gas venting path, a cooling medium channel, and a pack tray according to an embodiment of the present disclosure, FIG. 4 is a schematically cross-sectional view of a right side wall taken along line B-B' in FIG. 3, FIG. 5 is a schematically cross-sectional view of a front side wall taken along line C-C' in FIG. 3, FIG. 6 is a schematically cross-sectional view of the battery pack taken along A-A' in FIG. 1, and FIG. 7 is a diagram illustrating an example of a cooling operation for a gas venting path of a battery pack according to an embodiment of the present disclosure.

Referring to these drawings, a battery pack 10 according to an embodiment of the present disclosure includes a plurality of battery modules 100, a pack case 200, and a venting path cooling unit 300.

The battery module 100 may indicate an energy storage body in which battery cells 120 are electrically connected to have a predetermined capacity and output. The battery module 100 may be configured to include battery cells 120, components (not shown) for electrically connecting the battery cells, such as a bus-bar, components (not shown) for sensing the voltage of the battery cells, and a module case capable of integrally accommodating the above components, as well as the battery cells 120.

The battery cell 120 may be any type of battery cell 120 known at the time of filing the present disclosure. For example, any type of battery cell 120 such as a substantially cylindrical or prismatic can-type battery cell in which an electrode assembly and an electrolyte are stored and sealed in a metal can-type exterior case, a substantially plate-shaped pouch-type battery cell in which an electrode assembly and an electrolyte are stored and sealed in a pouch-type exterior case, or the like may be applied to the battery module 100.

The module case is a structure that supports the battery cells 120 so as not to move and protects them from external impact, and may be made of a material with high mechanical rigidity. In the present embodiment, the module case may be configured substantially in the form of a cuboid box including four side portions covering the front, rear, left, and right faces of the battery cells 120, and upper and lower portions covering the top and bottom of the battery cells 120.

In particular, the battery module 100 according to an embodiment of the present disclosure includes a sensor member 110. The sensor member 110 may include at least one of a temperature sensor that senses a change in temperature of the battery module 100 and a gas sensor that senses gas generated from the battery module 100.

The sensor member 110 may be attached to the outside or inside of the module case. In addition, the sensor member 110 may be configured to perform wired or wireless communication with the coolant controller 320 of a venting path cooling unit 300, which will be described later. Accordingly, when a thermal event occurs in the battery module 100, a danger signal may be transmitted from the sensor member 110 to the coolant controller 320 or other external devices. For example, the external devices may include an electronic control unit (ECU) of an electric vehicle to which the battery pack 10 is mounted. In this case, based on the danger signal, a warning message, along with a warning sound, may be displayed on a display by the ECU in the vehicle, causing the driver to respond thereto quickly.

The pack case 200 is configured to accommodate the plurality of battery modules 100. For example, the pack case 200 includes a pack tray 210 and a pack cover 220, as shown in FIGS. 1 and 2. The pack tray 210 is configured in the form of a box with a top opening to accommodate the battery modules 100 therein, and the pack cover 220 may be configured in the form of a plate capable of covering the top opening of the pack tray 210.

More specifically, the pack tray 210 may include a base plate 215, a wall frame 211, and partitions 216, as shown in FIG. 2. The base plate 215 may be configured in the form of a plate with a large area capable of supporting the bottom of the plurality of battery modules 100. In addition, as will be described later, the base plate 215 may include floor fluid passages 217A to 217F, through which a cooling medium may flow, therein to function as a heat sink.

The partitions 216 are structures provided on the upper surface of the base plate 215 and partition the inner space of the pack tray 210 horizontally or vertically. For example, as shown in FIG. 2, the inner space of the pack tray 210 is partitioned by the partitions 216, and the battery modules 100 may be placed in the partitioned space.

In an environment where external impact or vibration is applied, these partitions 216 serve to prevent deformation of the pack tray 210 by absorbing the impact or vibration. In addition, the partitions 216 also serve as firewalls that block the transfer of heat or flame between the battery modules 100 when ignition occurs inside the battery pack 10.

The wall frame 211 is the side member of the pack tray 210, and may be disposed along the perimeter of the base plate 215 while standing on the base plate 215, forming a wall surrounding the plurality of battery modules 100.

In particular, the wall frame 211 has a gas venting path 212, which communicates with the battery module 100, therein. Here, the gas venting path 212 indicates a gas or flame discharge path for discharging high-temperature gas or flame emitted from the battery module 100 to the outside of the battery pack 10.

As shown in FIG. 3, the wall frame 211 may include gas inflow walls 211a and 211b having a gas venting path 212 and at least one gas inlet 212a that is connected to the battery module such that gas generated from the battery module 100 flows into the gas venting path 212, and a gas discharge wall 211c having the gas venting path 212 and at least one gas outlet 212b through which gas is discharged from the gas venting path 212 to the outside of the pack case 200.

According to this configuration, if a thermal event occurs in any battery module 100 inside the battery pack 10 of the present disclosure, high-temperature gas or flame may move along the inside of the wall frame 211 and may be discharged to the outside of the pack case 200 through the gas outlet 212b provided at one side of the pack case 200. In this case, it is possible to minimize spreading of the high-temperature gas or flame, emitted from the battery module 100, into the inner space of the pack case 200 and discharge the same to the outside of the battery pack 10. Therefore, it is possible to suppress chain ignition or explosion of the battery pack 10 due to heat accumulation inside the battery pack 10, an increase in internal pressure, heat propagation between the battery modules 100, and the like.

More specifically, as shown in FIG. 2, the wall frame 211 according to an embodiment of the present disclosure may be disposed along the perimeter of the base plate 215 while standing on the base plate 215, and may include a right side wall 211a, a left side wall 211b, a front side wall 211c, and a rear side wall 211d surrounding the battery module 100.

As shown in FIG. 3, the right side wall 211a and the left side wall 211b may have a gas venting path 212 provided inside the walls, and a gas inlet 212a provide on the inner wall surface to be connected to the battery module 100. For example, each battery module 100 may further include a module venting pipe 130, and the module venting pipe 130 and the gas inlet 212a may be configured to be interconnectable. Accordingly, gas or flame inside each battery module 100 may flow into the gas venting path 212 through the module venting pipe 130 and the gas inlet 212a. That is, in the present embodiment, the right side wall 211a and the left side wall 211b correspond to the gas inflow wall.

As shown in FIG. 3, the front side wall 211c may have the gas venting path 212 provided inside the wall, and a gas outlet 212b provided on the outer wall surface to communicate with the gas venting path 212. Preferably, a metal mesh may be further coupled to the gas outlet 212b to prevent high-temperature particles or flames from easily passing therethrough.

The front side wall 211c has two gas venting paths 212. In FIG. 3, the gas venting path 212 on the right side of the front side wall 211c is connected to the gas venting path 212 of the right side wall 211a, and the gas venting path 212 on the left side of the front side wall 211c is connected to the gas venting path 212 of the left side wall 211b. Therefore, for example, the gas generated from the battery modules 100 arranged on the right side may flow into the gas venting path 212 of the right side wall 211a and move to the gas venting path 212 on the right side of the front side wall 211c, and may then be discharged to the outside of the pack case 200 through the gas outlet 212b on the right side. In addition, the gas generated from the battery modules 100 arranged on the left side may flow into the gas venting path 212 of the left side wall 211b and move to the gas venting path 212 on the left side of the front side wall 211c, and may then be discharged to the outside of the pack case 200 through the gas outlet 212b on the left side. That is, in the present embodiment, the front side wall 211c corresponds to the gas discharge wall.

Although the present embodiment shows the wall frame 211 configured such that the right side wall 211a and the left side wall 211b correspond to the gas inflow wall and such that the front side wall corresponds to the gas discharge wall, the positions of the gas inflow wall and the gas discharge wall, not limited thereto, may vary depending on, for example, arrangement of the battery modules 100.

Meanwhile, when high-temperature gas and flame generated from the battery module 100 move through the gas venting path 212 in the wall frame 211, the temperature of the wall frame 211 may increase significantly, which causes the heat of the wall frame 211 to transfer to other battery modules 100. Furthermore, if a large amount of high-temperature gas or flame is discharged to the outside of the battery pack 10, there is a risk in which the fire may quickly spread to structures outside the battery pack 10.

The battery pack according to the present disclosure may eliminate the above risks by the venting path cooling unit 300. Hereinafter, the venting path cooling unit 300 will be described in detail.

The venting path cooling unit 300 may be configured to cause a cooling medium to flow through the wall frame 211 on the basis of a danger signal generated from the sensor member 110 of each battery module 100, thereby cooling the gas venting path 212.

Referring to FIGS. 3 to 7, the venting path cooling unit 300 may include a cooling medium channel 310 that provides a passage for the cooling medium to move inside and outside the wall frame 211, and a coolant controller 320 that receives a danger signal from the sensor member 110 and circulates the cooling medium through the cooling medium channel 310.

As shown in FIG. 3, the cooling medium channel 310 includes a wall-inside channel 311 provided inside the wall frame 211 where the gas venting path 212 is located, and a wall-outside channel 312 communicating with the wall-inside channel 311 and provided outside the wall frame 211.

The wall-inside channel 311, like the gas venting path 212, may be provided inside the gas inflow wall and the gas discharge wall. That is, in the present embodiment, the wall-inside channel 311 is provided inside the right side wall 211a, the left side wall 211b, and the front side wall 211c of the wall frame 211 where the gas venting path 212 is positioned.

For example, the right side wall 211a of the wall frame 211 may be provided with a gas venting path 212 and a wall-inside channel 311 around the same, as shown in FIG. 4, and the front side wall 211c of the wall frame 211 may be provided with a gas venting path 212 and a wall-inside channel 311 around the same, as shown in FIG. 5. **In** addition, the wall-inside channel 311 of the right side wall 211a and the wall-inside channel 311 of the front side wall 211c may be connected to intersect each other. Likewise, the left side wall 211b of the wall frame 211 may also be provided with a wall-inside channel 311, and the wall-inside channel 311 of the left side wall 211b may be connected with the wall-inside channel 311 of the front side wall 211c, which is adjacent thereto, to intersect each other.

At least a portion of the cooling medium channel 310 may extend parallel to the gas venting path 212. In addition, the cooling medium channel 310 may be configured in the form of a round track surrounding the gas venting path 212, as shown in FIG. 3.

For example, as shown in FIG. 4, the wall-inside channel 311 includes a first straight section 311a and a second straight section 311c that extend parallel to the gas venting path 212 of the right side wall 211a above and below the gas venting path 212, respectively, and a first curved section 311b that surrounds one end of the gas venting path 212 and connects the first straight section 311a and the second straight section 311c.

In addition, as shown in FIG. 5, the wall-inside channel 311 includes a third straight section 311d and a fourth straight section 311f that extend parallel to the gas venting path 212 of the front side wall 211c above and below the gas venting path 212, respectively, and a second curved section 311e that surrounds the other end of the gas venting path 212 and connects the third straight section 311d and the fourth straight section 311f. In addition, the first straight section 311a and the third straight section 311d may be connected to intersect each other, and the second straight section 311c and the fourth straight section 311f may be connected to intersect each other. The wall frame 211 including the wall-inside channel 311 and the gas venting path 212 may be made of a thermally conductive metal material. Accordingly, if a cooling medium flows through the cooling medium channel 310, heat exchange may occur between the cooling medium channel 310 and the gas venting path 212, thereby cooling the gas venting path 212.

According to this implemented configuration, since the wall-inside channel 311 is provided so as to surround the entire gas venting path 212, the gas venting path 212 may be cooled more effectively and intensively. Therefore, as the high-temperature gas or flame moves along the cooled gas venting path 212, it may lose heat, thereby extinguishing flame, and the gas in the low temperature state may be discharged to the outside of the battery pack 10.

The wall-outside channel 312 may be configured in the form of a pipe that is disposed outside the wall frame 211 to be connected to the wall-inside channel 311, as shown in FIG. 2. In addition, a pair of wall-outside channels 312 may be provided. The cooling medium may enter the wall-inside channel 311 through one of the two wall-outside channels 312 and exit the wall-inside channel 311 through the other thereof.

The wall frame 211 may have a channel connector 213 on at least one side. The wall-inside channel 311 and the wall-outside channel 312 may be configured to be connected to and disconnected from each other through the channel connector 213.

For example, as shown in FIG. 2, a pair of channel connectors 213 may be provided in the area where the right side wall 211a and the front side wall 211c intersect and the area where the left side wall 211b and the front side wall 211c intersect. The channel connector 213 may be configured such that a portion thereof communicates with the wall-inside channel 311 inside the wall frame 211 and such that the remaining portion protrudes outward from the wall frame 211. In addition, the outer circumferential portion of the channel connector 213 and the inner circumferential portion of the wall-outside channel 312 may be configured to be fastened by screwing. In this case, the wall-inside channel 311 and the wall-outside channel 312 are easily connected, and the wall-outside channel 312 is not easily separated from the wall-inside channel 311 after connection, even if high water pressure is applied thereto.

According to this implemented configuration, a cooling medium may be easily supplied from the outside of the pack case 200 to the inside of the wall frame 211. In addition, as indicated by arrows in FIGS. 4 and 5, the cooling medium may flow along the wall-inside channel 311 of the right side wall 211a and the wall-inside channel 311 of the front side wall 211c, and the cooling medium that has absorbed heat may be discharged back to the outside of the pack case 200 through the wall-outside channel 312.

Next, an example of operation of cooling the gas venting path 212 of the battery pack 10 according to an embodiment of the present disclosure will be described with reference to FIGS. 6 and 7.

As shown in FIG. 6, each battery module 100 may be configured such that the module venting pipe 130 is connected to the gas inlet 212a of the gas venting path 212. That is, the battery pack 10 of the present disclosure may be configured such that all battery modules 100 are in communication with the gas venting path 212 of the right side wall 211a or the gas venting path 212 of the left side wall 211b.

As shown in FIG. 7, for example, if thermal events occur in the third battery module 100 and the fifth battery module 100, the sensor member 110 of the third battery module 100 and the sensor member 110 in the fifth battery module 100 detect the thermal events and transmit danger signals to the coolant controller 320.

Here, the sensor member 110 may be configured to transmit a danger signal to the coolant controller 320 if the state in which a rate of temperature change of the battery module 100 is greater than 1 degree C (dT/dt > 1°C) lasts for 3 seconds or more on the basis of a predetermined threshold temperature. Here, the predetermined threshold temperature may indicate the highest value within the normal temperature range of the battery module 100 when charging and discharging the battery cells 120.

The operation conditions of the sensor member 110 described above are due to the fact that, if the rate of temperature change of the battery module 100 is equal to or less than 1 degree C or if the state in which the rate of temperature change of the battery module 100 is greater than 1 degree C does not last for 3 seconds or more on the basis of the predetermined threshold temperature, it may be considered as a normal temperature change while the battery module 100 is running, so, in this case, it is unnecessary to supply a cooling medium to the wall frame 211. However, if the state in which the rate of temperature change of the battery module 100 is greater than 1 degree C on the basis of the threshold temperature lasts for 3 seconds or more, the battery module 100 is likely to ignite as time passes. In this case, it is necessary to cool the gas venting path 212 by preemptively supplying a cooling medium before the battery module 100 ignites.

The coolant controller 320 may optionally include a cooling chiller connected to the cooling medium channel 310, a communication modem capable of communicating with the sensor member 110, other processors known in the art, an application-specific integrated circuit (ASIC), a logic circuit, registers, a data processing device, and the like.

As described above, if danger signals are transmitted to the coolant controller 320 from the sensor member 110 of the third battery module 100 and the sensor member 110 of the fifth battery module 100, the cooling chiller may operate such that the cooling medium is circulated through the cooling medium channel 310, and thus the wall frame 211 and the gas venting path 212 provided therein may be cooled. In this case, as the gas and flame released from the third battery module 100 and the fifth battery module 100 move along the cooled gas venting path 212, heat may be dissipated and the flame may be extinguished, so that the gas may be cooled and then discharged to the outside of the pack case 200 through the gas outlet 212b.

As described above, according to the configuration of the present disclosure, it is possible to suppress high-temperature gas and flame from being strongly discharged to the outside of the battery pack 10 when ignition occurs in the battery pack 10, thereby improving ignition safety of the battery pack 10.

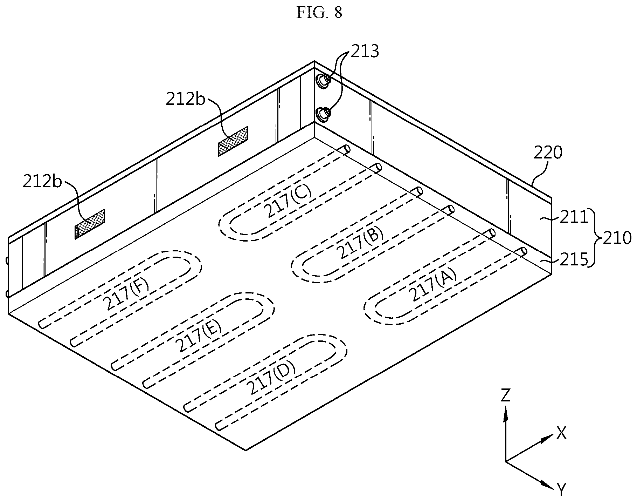

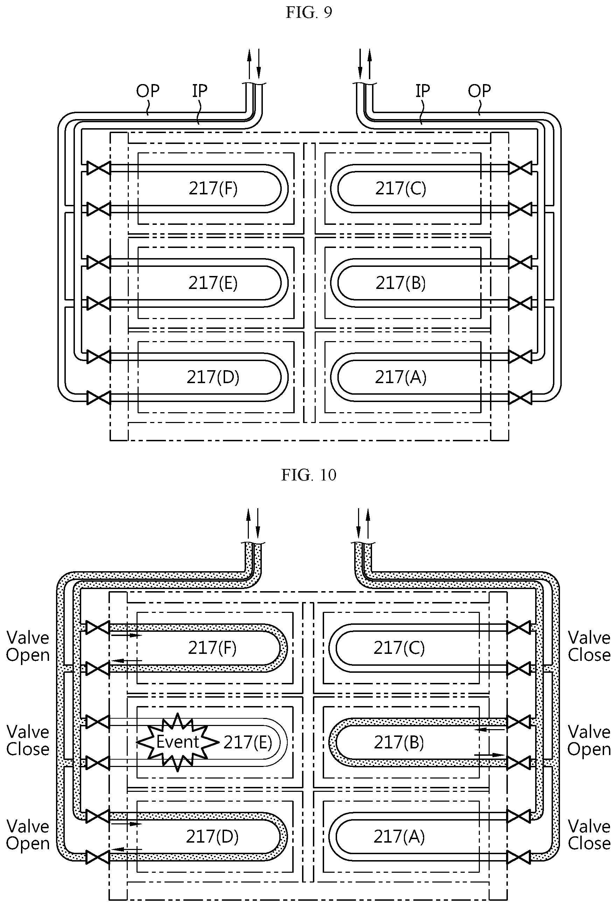

FIG. 8 is a perspective view of a battery pack viewed from the bottom according to another embodiment of the present disclosure, FIG. 9 is a diagram schematically illustrating the configuration of a cooling system of the battery pack in FIG. 8, and FIGS. 10 and 11 are diagrams illustrating the flow of cooling water when a thermal event occurs in the battery module of the battery pack in FIG. 8.

A battery pack according to another embodiment of the present disclosure will be described with reference to these drawings. The battery pack according to another embodiment of the present disclosure, compared to the battery pack according to the above-described embodiment, may further include an element capable of cooling the battery modules 100.

For example, the battery pack according to another embodiment of the present disclosure may further include floor fluid passages 217A to 217F inside the base plate 215 of the pack tray 210, as shown in FIG. 8.

A plurality of floor fluid passages 217A to 217F may be provided in respective sections of the base plate 215 corresponding to the positions of the respective battery modules 100 so as to allow the cooling medium to flow therethrough.

That is, Referring to FIGS. 7 and 8, the first to sixth battery modules 100 in FIG. 7 and the six floor fluid passages 217A to 217F in FIG. 8 are arranged at positions corresponding to each other. Therefore, the respective battery modules 100 may be intensively cooled by the corresponding floor fluid passages 217A to 217F.

In addition, as shown in FIG. 9, the floor fluid passages 217A to 217F may be connected to an inlet pipeline IP and an outlet pipeline OP connected from the outside of the pack case 200. In addition, the inlet pipeline IP and the outlet pipeline OP may be connected to the coolant controller 320. In addition, a flow control valve may be provided at the portions where the respective floor fluid passages 217A to 217F are branched from the inlet pipeline IP and at the portions where the respective floor fluid passages 217A to 217F are branched from the outlet pipeline OP. The flow rate of the cooling medium to be supplied to the respective floor fluid passages 217A to 217F may be controlled by opening and closing the flow control valves.

In addition, although not shown in detail in the drawing for convenience, the cooling medium may flow into the floor fluid passages 217A to 217F through the inlet pipeline IP, absorb heat from the battery modules 100, exit the pack case 200 through the outlet pipeline OP, and move to the coolant controller 320, and may move, after being cooled in the coolant controller 320, along the inlet pipeline IP and re-enter the respective floor fluid passages 217A to 217F.

In particular, in another embodiment of the present disclosure, the coolant controller 320 may be configured to selectively supply, based on a danger signal generated by the sensor member 110, the cooling medium to the floor fluid passages 217A to 217F such that the cooling medium may flow intensively in the sections of the base plate 215 where other battery modules 100, which are adjacent to the battery module 100 that transmits the danger signal, among the plurality of battery modules 100, are located.

For example, as shown in FIG. 10, if a thermal event occurs in the fifth battery module 100 (see FIG. 7), the second, fourth, and sixth battery modules 100 adjacent to the fifth battery module 100 may be intensively cooled to maximally delay propagation of heat from the fifth battery module 100 to the adjacent second, fourth, and sixth battery modules 100. At this time, the flow control valves may be opened and closed as shown in FIG. 10 according to a control signal from the coolant controller 320. Accordingly, the cooling medium may flow intensively through the floor fluid passages 217B, 217D, and 217F corresponding to the second, fourth, and sixth battery modules 100, thereby intensively cooling the second, fourth, and sixth battery modules 100.

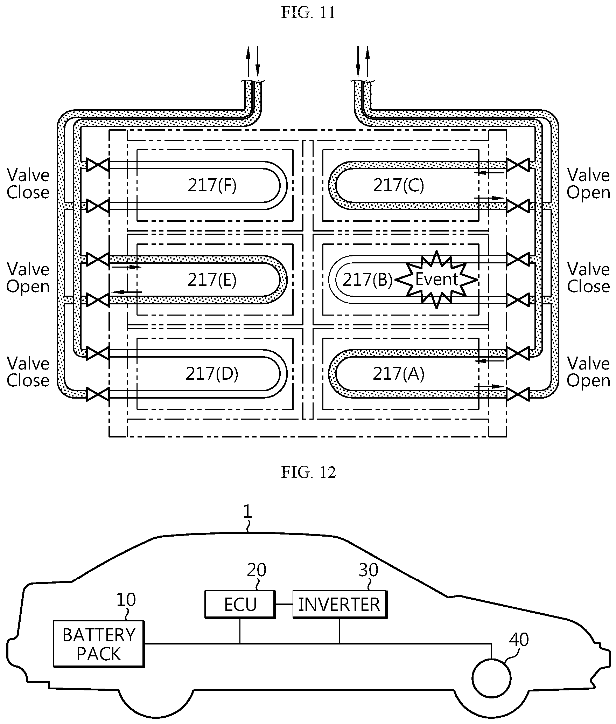

As another example, as shown in FIG. 11, if a thermal event occurs in the second battery module 100 (see FIG. 7), the first, third, and fifth battery modules 100 may be intensively cooled to maximally delay propagation of heat from the second battery module 100 to the first, third, and fifth battery modules 100. At this time, the flow control valves may be opened and closed according to a control signal from the coolant controller 320 as shown in FIG. 11. Accordingly, the cooling medium may intensively flow through the floor fluid passages 217A, 217C, and 217E corresponding to the first, third, and fifth battery modules 100, thereby intensively cooling the first, third, and fifth battery modules 100.

In general, a number of battery modules 100 are densely arranged in the battery pack. Therefore, other battery modules 100 adjacent to the battery module 100 where an event occurred receive thermal damage, and if this worsens, chain ignition quickly occurs in the battery modules 100 other than the trigger battery module 100, thereby lowering the fire safety of the battery pack.

However, according to the above configuration, based on the trigger battery module 100 where an event occurs, other battery modules 100 adjacent thereto may be intensively cooled, thereby maximally preventing heat from spreading around the trigger battery module 100.

Meanwhile, referring to FIG. 12, a vehicle 1 according to the present disclosure may be configured to include the above-described battery pack 10 according to the present disclosure, an ECU (Electronic Control Unit) 20, an inverter 30, and a motor 40. Preferably, the vehicle 1 may be an electric vehicle.

The battery pack 10 may be used as an electric energy source to drive the vehicle 1 by providing driving force to the motor 40. The battery pack 10 may be charged or discharged by the inverter 30 according to the driving of the motor 40 and/or internal combustion engine (not shown). The battery pack 10 may be charged by a regenerative charging device combined with a brake. The battery pack 10 may be electrically connected to the motor 40 of the vehicle through the inverter 30.

The ECU 20 is an electronic control device that controls the state of the vehicle 1. For example, it determines torque information on the basis of information such as accelerator, brake, speed, etc., and controls the output of the motor 40 to conform to the torque information. In addition, the ECU 20 transmits a control signal to the inverter 30 such that the battery pack 10 may be charged or discharged on the basis of state information such as SOC and SOH of the battery pack 10 received from the BMS. The inverter 30 charges or discharges the battery pack 10 on the basis of the control signal from the ECU 610. The motor 40 drives, based on control information (e.g., torque information) transmitted from the ECU 20, the vehicle 1 using the electrical energy of the battery pack 10.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

In addition, although terms indicating directions such as upward, downward, left, right, forward, and backward directions are used in this specification, it is obvious to those skilled in the art that these terms are only for convenience of explanation and may vary depending on the location of the target object or the location of the observer.

## Claims

1. A battery pack comprising:
a plurality of battery modules each having a sensor member configured to detect gas or heat;
a pack case comprising a wall frame that has a gas venting path provided therein to communicate with the battery module and surrounds the battery module; and
a venting path cooling unit configured to cool the gas venting path by causing a cooling medium to flow through the wall frame on the basis of a danger signal generated from the sensor member.

2. The battery pack according to claim 1,
wherein the venting path cooling unit comprises:
a cooling medium channel configured to provide a passage for the cooling medium to move inside and outside the wall frame; and
a coolant controller configured to receive a danger signal from the sensor member and circulate the cooling medium through the cooling medium channel.

3. The battery pack according to claim 2,
wherein the cooling medium channel comprises
a wall-inside channel provided inside the wall frame where the gas venting path is located, and a wall-outside channel communicating with the wall-inside channel and provided outside the wall frame.

4. The battery pack according to claim 3,
wherein the wall frame comprises a channel connector on at least one side, and
wherein the wall-inside channel and the wall-outside channel are configured to be connected and disconnected through the channel connector.

5. The battery pack according to claim 2,
wherein the pack case comprises:
a pack tray comprising a base plate configured to support the bottom of the plurality of battery modules, and the wall frame disposed along the perimeter of the base plate while standing on the base plate; and
a pack cover configured to cover a top opening of the pack tray.

6. The battery pack according to claim 2,
wherein the wall frame is made of a thermally conductive material such that the cooling medium channel and the gas venting path exchange heat with each other.

7. The battery pack according to claim 2,
wherein the wall frame comprises:
a gas inflow wall comprising the gas venting path and at least one gas inlet connected to the battery module to allow gas to flow from the battery module into the gas venting path; and
a gas discharge wall comprising the gas venting path and a gas outlet configured to discharge gas from the gas venting path to the outside of the pack case.

8. The battery pack according to claim 7,
wherein at least a portion of the cooling medium channel extends parallel to the gas venting path inside the gas inflow wall and the gas discharge wall.

9. The battery pack according to claim 7,
wherein the cooling medium channel is configured in the form of a round track surrounding the gas venting path inside the gas inflow wall and the gas discharge wall.

10. The battery pack according to claim 1,
wherein the sensor member comprises at least one of a temperature sensor configured to sense a change in temperature of the battery module and a gas sensor configured to sense gas generated from the battery module.

11. The battery pack according to claim 1,
wherein the sensor member is configured to transmit a danger signal to the venting path cooling unit if a state in which a rate of temperature change of the battery module is greater than 1 degree C (dT/dt > 1°C) lasts for 3 seconds or more on the basis of a predetermined threshold temperature.

12. The battery pack according to claim 5,
wherein the pack tray comprises
a partition disposed on the upper surface of the base plate and configured to partition the inner space of the pack tray horizontally or vertically.

13. The battery pack according to claim 5,
wherein the base plate comprises a floor fluid passage therein, and
wherein a plurality of floor fluid passages is respectively provided in sections of the base plate corresponding to the positions of the respective battery modules so as to cause the cooling medium to flow in the respective sections.

14. The battery pack according to claim 13,
wherein the coolant controller is configured to selectively supply, based on the danger signal, the cooling medium to the floor fluid passages such that the cooling medium flows intensively in the sections of the base plate where other battery modules, which are adjacent to a battery module that transmits the danger signal, among the plurality of battery modules, are located.

15. A vehicle comprising the battery pack according to any one of claims 1 to 14.
